# EUROPEAN PATENT SPECIFICATION

(11) **EP 1 914 712 B1**
(45) Date of publication and mention of the grant of the patent: **01.08.2018**
(21) Application number: 07118913.8
(22) Date of filing: 19.10.2007
(51) Int. Cl.: G09G 3/36, G09G 3/34

(54) **Light source device, light source driving device, light emission amount control device and liquid crystal display**
Lichtquellenvorrichtung, Ansteuerungsvorrichtung für eine Lichtquelle, Steuerungsvorrichtung der Lichtemissionsmenge und Flüssigkristallanzeige
Dispositif de source lumineuse, dispositif de commande de source lumineuse, dispositif de contrôle de la quantité d'émission lumineuse, et affichage à cristaux liquides

(30) Priority: 19.10.2006 JP 2006285086
(43) Date of publication of application: 23.04.2008
(73) Proprietor: Saturn Licensing LLC, New York, NY 10022-3211 (US)
(72) Inventor: Ichikawa, Hiroaki, TOKYO (JP); Kikuchi, Kenichi, TOKYO (JP); Hatajiri, Kimio, TOKYO (JP)
(74) Representative: Delumeau, François Guy

(56) References cited:
- WO-A-02/37454
- JP-A- 2004 013 244
- JP-A- 2005 208 486
- US-A- 5 731 794
- US-A- 6 069 676
- US-A1- 2005 116 921
- US-A1- 2005 200 578

## Description

### BACKGROUND OF THE INVENTION

### 1. Field of the Invention

The present invention relates to a light source device having a plurality of lighting regions which are controllable independently of one another, a light source driving device and a light emission amount control device applied to such a light source device, and a liquid crystal display using such a light source device.

### 2. Description of the Related Art

In recent years, flat panel displays as typified by liquid crystal TVs and plasma display panels (PDPs) have become a trend, and among them, most of mobile displays are liquid crystal displays, and precise color reproducibility is desired in the mobile displays. Moreover, as backlights for liquid crystal panels, CCFLs (Cold Cathode Fluorescent Lamps) using fluorescent tubes are mainstream; however, mercury-free light sources are environmentally desired, so light emitting diodes (LEDs) and the like hold promise as light sources replacing CCFLs.

In such an LED backlight system, to improve video response of a liquid crystal panel, a light source section includes a plurality of separate lighting sections so as to approximate the impulse-type drive of a CRT (Cathode Ray Tube), thereby the light source section carries out sequential lighting operation (blinking operation) in which the plurality of lighting sections are sequentially turned on on a horizontal line basis. It is considered that compared to a CCFL backlight system, the LED backlight system is suitable for the sequential lighting operation, because the LED backlight system has good response when switching between a lighting-on state and a lighting-off state, and the LED backlight system does not have afterglow characteristics.

Further, in the LED backlight system, when a light-sensing device detects illumination light, and the light emission amount of the LED is controlled by a detected value, fluctuations in the intensity of illumination light can be reduced. In addition, in the case of an additive process backlight system which uses a plurality of kinds of LEDs such as a red LED, a green LED and a blue LED to obtain a specific color light by mixing a plurality of color lights, in addition to fluctuations in the intensity of illumination light, fluctuations in the chromaticity of illumination light can be reduced by the same feedback system.

For example, Japanese Unexamined Patent Application Publication No. 2005-208486 discloses a technique in which when the LED backlight system performs sequential lighting operation (in this case, sequential light-off), the light emission amount of each LED group (each lighting section) is controlled based on information of the light amount variations detected by a photosensor section.

### SUMMARY OF THE INVENTION

In the case where the light emission amount of an LED is controlled by a feedback system using a light-sensing device in the above-described manner, in a backlight system performing sequential lighting operation, there is an issue of where to arrange the light-sensing device relative to the light source section. In the case where sequential lighting operation is performed, a distance from the light-sensing device to each lighting section is different, so the light amount received by the light-sensing device is changed depending on the position of the lighting section which is turned on. In the case where the light amount received by the light-sensing device is continually changed depending on the position of the lighting section which is turned on, it is difficult to keep the intensity or the chromaticity of illumination light constant on the basis of the light reception amount.

Japanese Unexamined Patent Application Publication No. 2005-208486 (refer to Example 2 and FIG. 7 in Japanese Unexamined Patent Application Publication No. 2005-208486) discloses a technique in which a light guide guiding light emitted from an LED to a photosensor is arranged in each LED group so as to reduce an error in the light amount caused by a difference in the distance between the photosensor to each LED group.

However, when the light guide is arranged in each LED group, a large number of light guides are necessary, so the number of parts increases, thereby manufacturing cost is increased.

Thus, in the technique in the related art, in the light source device performing sequential lighting operation using a plurality of lighting sections, it is difficult to further reduce fluctuations in the intensity or chromaticity of illumination light with a simple configuration.

WO02/37454 describes a white illumination method where the output intensities of red, green and blue lighting components which produce white illumination of an LCD panel can be controlled individually so as to improve the white balance. This control is based on detecting the intensity of the emitted red, blue and green light, and the intensity of red, green and blue components of ambient light. The red, green and blue lighting components simultaneously emit light so as to produce white illumination. WO02/37454 does not consider problems that can arise when elements of a light source are sequentially driven and light intensity is detected from emitting light sources at different distances from the detector.

US 2005/200578 and JP 2005-208486 describe systems in which the light-emission amounts of respective different portions of a backlight are individually controlled based on respective measurements of the light received from each portion.

In US 2005/200578 there are different light sensors to detect the light emitted by each backlight portion. In JP 2005-208486 a single light sensor is used and the output therefrom is sampled at respective times corresponding to the periods when each of the backlight portions is outputting light. The light output sampled at a particular time is used as a measurement of the light-emission intensity of a particular backlight portion and is used to control the driving of that backlight portion. JP 2005-208486 recognizes that different backlight portions may be located at different distances from its single light sensor but proposes (Fig.7 of JP 2005-208486) to tackle the problem by providing light guides between each backlight portion and the light sensor.

In view of the foregoing, it is desirable to provide a light source device capable of further reducing fluctuations in the intensity or the like of illumination light with a simple configuration, a light source driving device and a light emission amount control device applied to such a light source device, and a liquid crystal display including such a light source device.

According to an embodiment of the invention, there is provided a light emission amount control device, being applied to a light source device, the light source device including a light source and a drive means, the light source including a plurality of lighting sections controllable independently of one another, each lighting section occupying a respective different location, the drive means for driving the light source so that the lighting sections at different locations are sequentially turned on, the light emission amount control device comprising: a light-sensing device receiving light from the light source in which the lighting sections are sequentially turned on; a control means adapted to control the light emission amount of the plurality of lighting sections by controlling the drive means dependent on the light received by the light-sensing device, to reduce fluctuations in the intensity or chromaticity of illumination light produced by the light source; and a sampling means for sampling the light receiving signal at a timing in synchronization with a lighting period of a specific lighting section at a specific location, to supply the control means with the sampled light receiving signal; characterized in that the control means is configured to control the light emission amounts of each of the plurality of lighting sections at said different locations dependent on the light received by the light-sensing device from the specific lighting section at the specific location.

According to an embodiment of the invention, there is provided a light source driving device comprising: the above-mentioned light emission amount control device, and said drive means for driving the light source so that the lighting sections at different locations are sequentially turned on.

According to an embodiment of the invention, there is provided a light source device comprising: the above-mentioned light source driving device and said light source including a plurality of lighting sections controllable independently of one another, each of said plurality of lighting sections occupying a respective different location.

According to an embodiment of the invention, there is provided a liquid crystal display comprising: an illumination means including the above-mentioned light source device for emitting light; and a liquid crystal panel modulating the light emitted from the illumination means on the basis of an image signal.

In the light source device, the light source driving device, the light emission amount control device and the liquid crystal display according to the embodiment of the invention, light from the light source sequentially turning on the lighting sections is received by the light-sensing device, and the drive means is controlled on the basis of a light receiving signal obtained by the light-sensing device from a specific lighting section so as to control the light emission amount of each lighting section. Therefore, the magnitude of the light receiving signal is not dependent on the distance from the light-sensing device and the lighting section which is turned on.

The light source device according to the embodiment of the invention can include a sampling means for sampling the light receiving signal from the light-sensing device at a timing in synchronization with a lighting period of the specific lighting section to supply the control means with the light receiving signal sampled. With such a configuration, the light receiving signal from the light-sensing device is sampled in synchronization with the lighting period of the specific lighting section, and the light receiving signal is supplied to the control means. Therefore, the drive means is constantly controlled on the basis of the light receiving signal obtained by the light-sensing device from the specific lighting section.

Moreover, the light source device according to the embodiment of the invention may include a holding means for obtaining and holding the light receiving signal from the light-sensing device at a timing in synchronization with a lighting period of the specific lighting section; and a sampling means for sampling the light receiving signal held by the holding means to supply the control means with the light receiving signal sampled. In such a configuration, the light receiving signal is held at a timing in synchronization with the specific lighting section, and the held light receiving signal is sampled to be supplied to the control means. Therefore, in this case, irrespective of the sampling period of the sampling means, the drive means is constantly controlled on the basis of the light receiving signal obtained by the light-sensing device from the specific lighting section.

The light source device according to the embodiment of the invention can be used as an illumination system for liquid crystal display modulating light from each lighting section, of which the light emission amount is controlled by the above-described control means, on the basis of an image signal. In such a configuration, fluctuations in the intensity or chromaticity of a display light emitted from the liquid crystal panel can be reduced, so the image quality of a displayed image is improved.

In the light source device, the light source driving device, the light emission amount control device or the liquid crystal display according to the embodiment of the invention, light from the light source sequentially turning on the lighting sections is received by the iight-sensing device, and the drive means is controlled on the basis of a light receiving signal obtained by the light-sensing device from a specific lighting section so as to control the light emission amount of each lighting section, so the magnitude of the light receiving signal can be independent on the distance between the light-sensing device and the lighting section which is turned on. Moreover, the complication of the configuration such as an increase in the number of parts is prevented. Therefore, fluctuations in the intensity or the like of the illumination light can be further reduced with a simple configuration.

Other and further objects, features and advantages of the invention will appear more fully from the following description.

### BRIEF DESCRIPTION OF THE DRAWINGS

FIG. 1 is a perspective view showing the whole configuration of a liquid crystal display according to a first embodiment of the invention;
FIGs. 2A and 2B are schematic plan views showing a configuration example of a unit (a lighting section) of a light source section in a backlight system shown in FIG. 1;
FIG. 3 is a schematic plan view showing an example of the arrangement of a lighting region in the light source section;
FIG. 4 is a block diagram showing the whole configuration of the liquid crystal display shown in FIG. 1;
FIG. 5 is an illustration including a sectional view of the light source section and a block diagram of an example of a configuration receiving illumination light from the light source section;
FIG. 6 is a block diagram showing detailed configurations of a driving section and a control section of the light source section shown in FIG. 4;
FIG. 7 is a timing waveform chart for describing an example of a method of driving a liquid crystal panel and the backlight system shown in FIG. 1;
FIGs. 8A, 8B and 8C are schematic plan views for describing sequential lighting operation of the light source section and operation of receiving illumination light;
FIG. 9 is a plot for describing an example of a relationship between the light reception amount of a photosensor and the position of the lighting region;
FIG. 10 is a timing waveform chart showing operation of a backlight system according to a comparative example;
FIG. 11 is a timing waveform chart showing operation of the backlight system according to the first embodiment;
FIG. 12 is a block diagram showing the whole configuration of a liquid crystal display according to a second embodiment;
FIG. 13 is a block diagram showing detailed configurations of a driving section and a control section of the light source section shown in FIG. 12;
FIG. 14 is a circuit diagram for describing a detailed configuration example of a sample/hold section shown in FIG. 13;
FIG. 15 is a timing waveform chart showing operation of the backlight system according to the second embodiment;
FIG. 16 is a schematic plan view showing the arrangement of a light receiving section according to a modification of the invention; and
FIG. 17 is a schematic sectional view showing the arrangement of a light receiving section according to another modification of the invention.

### DETAILED DESCRIPTION OF THE PREFERRED EMBODIMENTS

Preferred embodiments will be described in detail below referring to the accompanying drawings.

### First Embodiment

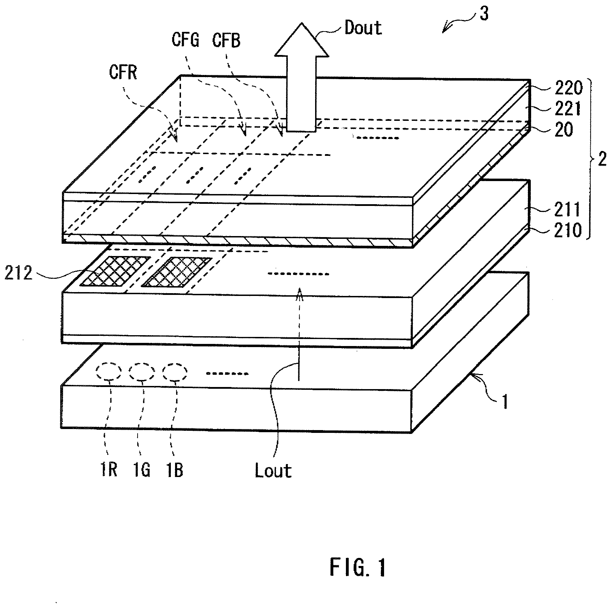

FIG. 1 shows the whole configuration of a liquid crystal display (a liquid crystal display 3) according to a first embodiment of the invention. The liquid crystal display 3 is a so-called transmissive liquid crystal display emitting transmitted light as display light Dout, and includes a backlight system 1 as a light source device according to a first embodiment of the invention and a transmissive liquid crystal display panel 2.

The liquid crystal display panel 2 includes a transmissive liquid crystal layer 20, a pair of substrates between which the liquid crystal layer 20 is sandwiched, that is, a TFT (Thin Film Transistor) substrate 211 as a substrate on a side closer to the backlight system 1 and a facing electrode substrate 221 as a substrate facing the TFT substrate 211, and polarizing plates 210 and 220 laminated on a side of the TFT substrate 211 and a side of the facing electrode substrate 221 opposite to sides closer to the liquid crystal layer 20 is arranged, respectively.

Moreover, the TFT substrate 211 includes pixels in a matrix form, and in each pixel, a pixel electrode 212 including a driving device such as a TFT is formed.

The backlight system 1 is an additive process backlight system obtaining illumination light Lout as a specific color light (in this case, a white light) by mixing a plurality of color lights (in this case, a red light, a green light and a blue light), and includes a light source section (a light source section 10 which will be described later) including a plurality of red LEDs 1R, a plurality of green LEDs 1G and a plurality of blue LEDs 1B.

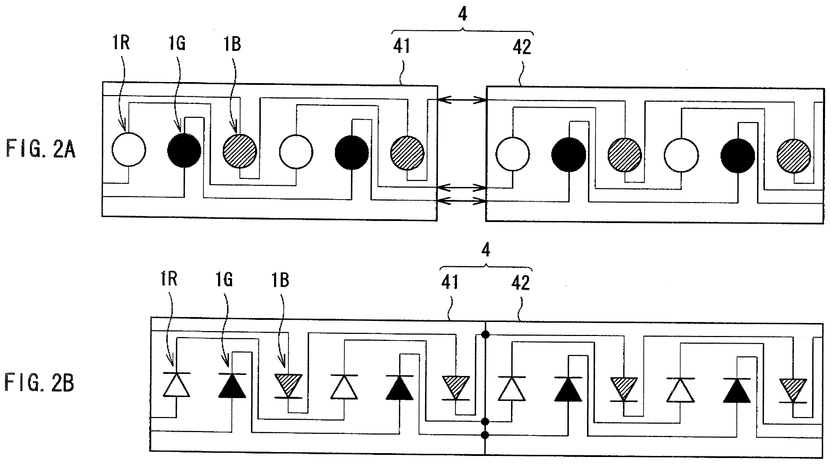

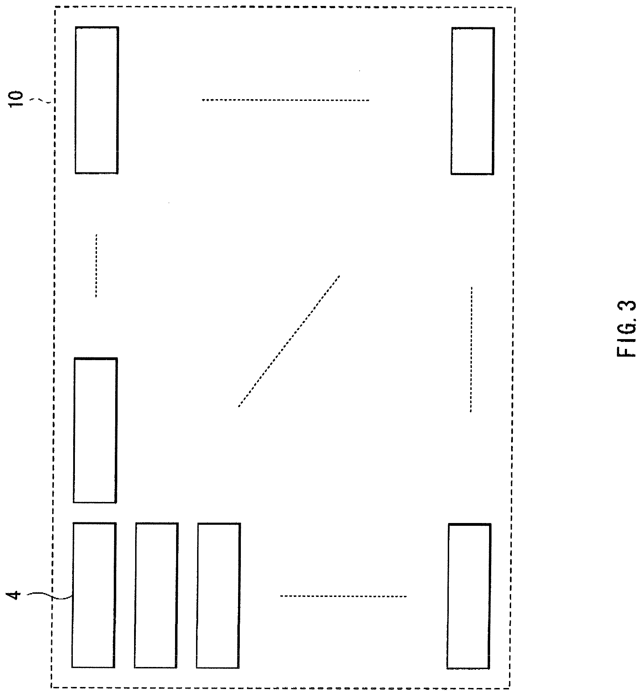

FIGs. 2A, 2B and 3 show an example of the arrangement of each LED in the backlight system 1.

As shown in FIG. 2A, in the backlight system 1, a pair of red LEDs 1R, a pair of green LEDs 1G and a pair of blue LEDs 1B constitute each of unit cells 41 and 42 in a light emitting section, and two unit cells 41 and 42 constitute a lighting section 4 as a unit of the light emitting section. Moreover, LEDs of each color are serially connected to one another in each unit cell and between the unit cells 41 and 42. More specifically, as shown in FIG. 2B, an anode of an LED of each color is connected to a cathode of another LED of the same color.

For example, as shown in FIG. 3, the lighting sections 4 with such a configuration are arranged in a matrix form in the light source section 10, and as will be described later, the lighting sections 4 can be controlled independently of one another,.

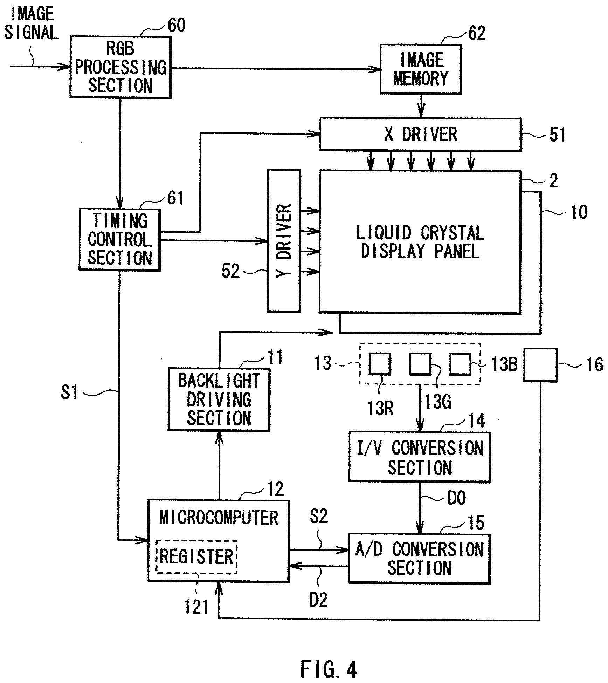

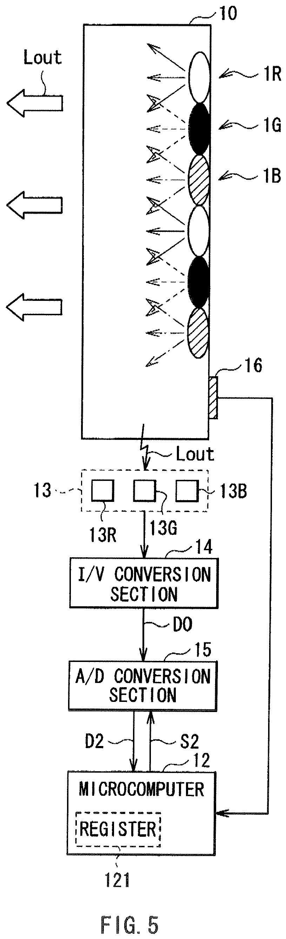

Next, referring to FIGs. 4 and 5, the configurations of driving sections and control sections of the above-described liquid crystal display panel 2 and the above-described light source section 10 will be described in detail below. FIG. 4 shows a block diagram of the liquid crystal display 3, and FIG. 5 specifically shows a block diagram of the light source section 10 and its vicinity together with a sectional view of the light source section 10.

As shown in FIG. 4, a driving circuit for displaying an image by driving the liquid crystal display panel 2 includes an X driver (data driver) 51 supplying a drive voltage on the basis of an image signal to each pixel electrode 212 in the liquid crystal display panel 2, a Y driver (gate driver) 52 line-sequentially driving the pixel electrodes 212 in the liquid crystal panel 2 along a scanning line (not shown), a timing control section (a timing generator (TG)) 61 controlling the X driver 51 and the Y driver 52, an RGB processing section (a signal generator (SG)) 60 generating an RGB signal by processing an image signal from outside, and an image memory 62 as a frame memory storing the RGB signal from the RGB processing section 60.

On the other hand, a driving and control section for performing sequential lighting operation which will be described later by driving the light source section 10 of the backlight system 1 includes a backlight driving section 11, a microcomputer 12, a light-sensing section 13, an I/V conversion section 14, an A/D conversion section 15 and a temperature sensor 16.

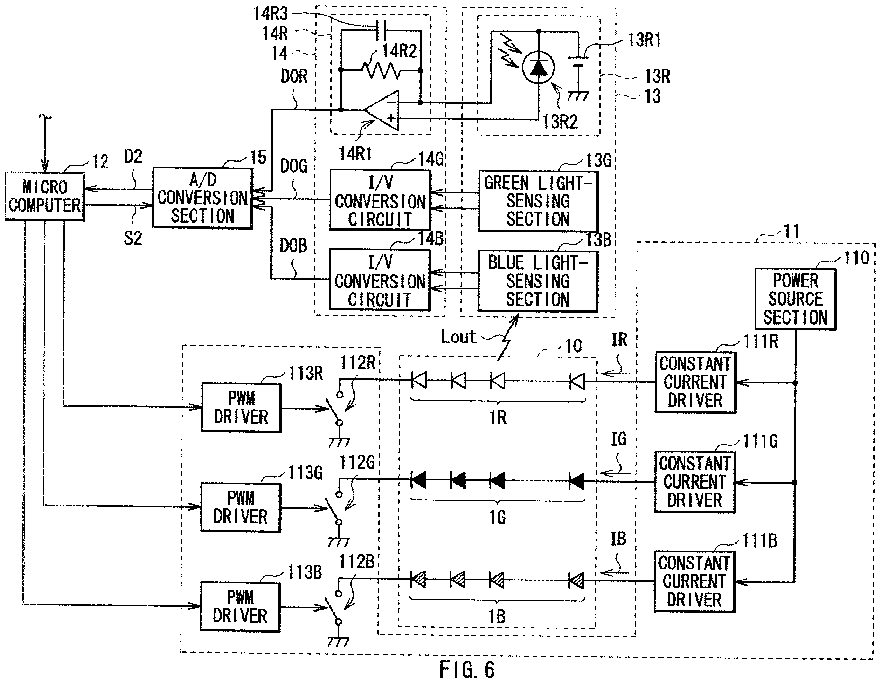

The backlight driving section 11 drives the light source section 10 so as to perform line sequential lighting operation which will be described later in each lighting section 4. The specific configuration of the backlight driving section 11 will be described later (refer to FIG. 6).

The light-sensing section 13 obtains a light receiving signal by receiving illumination light Lout from the light source section 10, and includes a red light-sensing section 13R selectively extracting and receiving a red light from a mixed color light (in this case , a white light) produced by mixing a plurality of color lights (in this case, a red light, a green light and a blue light), a green light-sensing section 13G selectively extracting and receiving a green light from the mixed color light, and a blue light-sensing section 13B selectively extracting and receiving a blue light from the mixed color light. The temperature sensor 16 detects the temperature of the light source section 10. For example, as shown in FIG. 5, the light-sensing section 13 and the temperature sensor 16 are arranged in the vicinity of the light source section 10 (in this case, a bottom side or a back side of the light source section 10). The specific configuration of the light-sensing section 13 will be described later (refer to FIG. 6).

The I/V conversion section 14 performs I/V (current/voltage) conversion on each color light receiving signal obtained by the light-sensing section 13 so as to output light reception data D0 as an analog voltage signal of each color. The specific configuration of the I/V conversion section 14 will be described later (refer to FIG. 6).

The A/D conversion section 15 samples the light reception data D0 of each color outputted from the I/V conversion section 14 at a predetermined timing on the basis of a sampling signal S2 outputted from the microcomputer 12, and converts sampled light reception data D1 (not shown) of each color into light reception data D2 of each color as a digital voltage signal by A/D (analog/digital) conversion to supply the light reception data D2 of each color to the microcomputer 12.

The microcomputer 12 controls the driving operation of the backlight driving section 11 on the basis of the light reception data D2 of each color supplied from the A/D conversion section 15 and temperature detection data supplied from the temperature sensor 16. Moreover, although the detail will be described later, the microcomputer 12 generates and outputs the above-described sampling signal S2 on the basis of a synchronizing signal S1 (for example, a synchronizing signal (such as a vertical synchronizing signal Vsync) supplied from the timing control to the Y driver when displaying an image on the liquid crystal panel 2) supplied from the timing control section 61, and the microcomputer 12 adjusts the period of line sequential lighting operation (a lighting period) in the light source section 10 and a sampling period in the A/D conversion section 15. In addition, optimum values of the rising edge and the trailing edge of a signal used for generating the sampling signal S2 are stored as register values in a register 121 including a nonvolatile memory arranged in the microcomputer 12 in advance.

Next, referring to FIG. 6, the specific configurations of the backlight driving section 11, the light-sensing section 13 and the I/V conversion section 14 will be described below. FIG. 6 shows a block diagram of the specific configurations of the backlight driving section 11, the light-sensing section 13 and the I/V conversion section 14 and the A/D conversion section 15 and the microcomputer 12.

At first, the backlight driving section 11 includes a power source section 110, constant current drivers 111R, 111G and 111B supplying constant currents IR, IG and IB to the anodes of the red LEDs 1R, the green LEDs 1G and the blue LEDs 1B in the light source 10 by a power supplied from the power source section 110, respectively, switching devices 112R, 112G and 112B connected between the cathodes of the red LEDs 1R, the green LEDs 1G and the blue LEDs 1B and the ground, respectively, and PWM drivers 113R, 113G and 113B performing PWM (Pulse Width Modulation) control on the switching devices 112R, 112G and 112B on the basis of the control by the microcomputer 12, respectively. For convenience sake, it is shown that the red LEDs 1R, the green LEDs 1G and the blue LEDs 1B each are serially connected to one another in the light source section 10.

As described above, the light-sensing section 13 includes the red light-sensing section 13R, the green light-sensing section 13G and the blue light-sensing section 13B. Among them, the red light-sensing section 13R includes a DC power source 13R1 and a photodiode 13R2 as a photosensor selectively receiving a red light and generating a current according to the amount of the red light. The cathode of the photodiode 13R2 is connected to the DC power source 13R1, and the anode of the photodiode 13R2 is connected to a non-inverting input terminal of an operational amplifier 14R1 in the I/V conversion circuit 14R which will be described later. The green light-sensing section 13G and the blue light-sensing section 13B have the same configuration as that of the red light-sensing section 13R. In the red light-sensing section 13R, the green light-sensing section 13G and the blue light-sensing section 13B having such a configuration, in the photodiode for each color, each color light is extracted from the illumination light Lout from the light source section 10, and a current according to the amount of each color light is generated, and then the current is supplied to the I/V conversion section 14 as light reception data of a current value.

The I/V conversion section 14 includes IV conversion circuits 14R, 14G and 14B as I/V conversion circuits for each color. Among them, the red I/V conversion circuit 14R includes the operational amplifier 14R1, a resistor 14R2 and a capacitor 14R3. The non-inverting input terminal of the operational amplifier 14R1 is connected to an end of the resistor 14R2, an end of the capacitor 14R3 and the DC power source 13R1 and the cathode of the photodiode 13R2 in the red light-sensing section 13R. Moreover, the output terminal of the operational amplifier 14R1 is connected to an input terminal of the A/D conversion section 15. In the I/V conversion circuit 14R with such a configuration, light reception data of the current value supplied from the red light-sensing section 13R is converted into red light reception data D0R as light reception data of an analog voltage, and the red light reception data DOR is outputted to the A/D conversion section 15. The green I/V conversion circuit 14G and the blue I/V conversion circuit 14B have the same configuration as that of the red I/V conversion circuit 14R, and green light reception data D0G and blue light reception data D0B as light reception data of analog voltages are outputted to the A/D conversion section 15.

In the description, the backlight driving section 11 corresponds to a specific example of "a drive means" in the invention, the microcomputer 12 corresponds to a specific example of "a control means" in the invention, the light-sensing section 13 corresponds to a specific example of "a light-sensing device" in the invention, and the A/D conversion section 15 corresponds to a specific example of "a sampling means" in the invention. Moreover, the light-sensing section 13, the I/V conversion section 14, the A/D conversion section 15 and the microcomputer 12 correspond to specific examples of "a light emission amount control device" in the invention, the backlight driving section 11, the light-sensing section 13, the I/V conversion section 14, the A/D conversion section 15 and the microcomputer 12 correspond to specific examples of "a light source driving device" in the invention, the light source section 10, the backlight driving section 11, the light-sensing section 13, the I/V conversion section 14, the A/D conversion section 15 and the microcomputer 12 correspond to specific examples of "a backlight system" in the invention.

Next, the operations of the backlight system 1 with such a configuration and the liquid crystal display 3 according to the embodiment will be described in detail below.

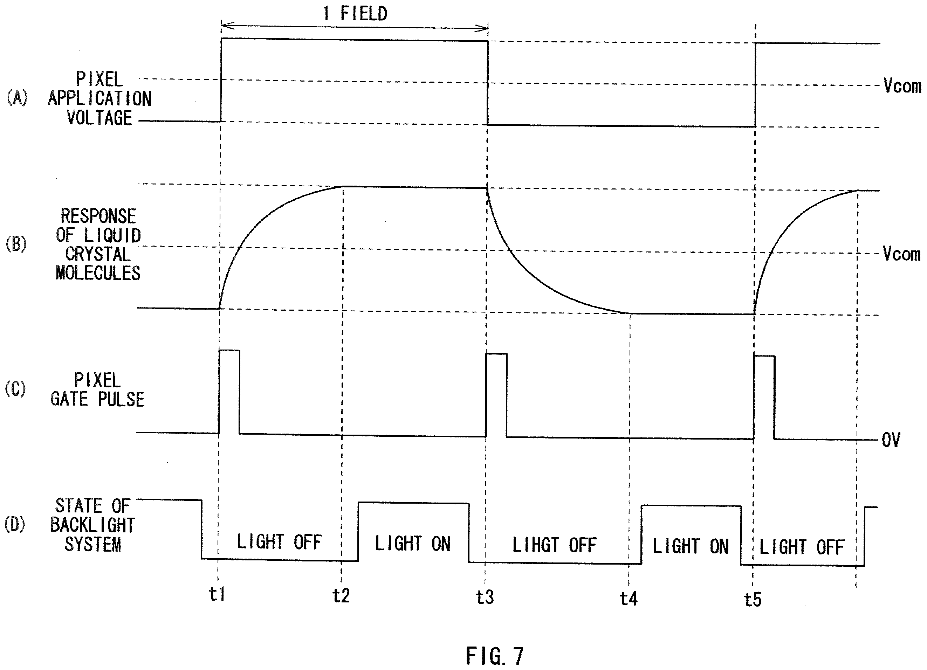

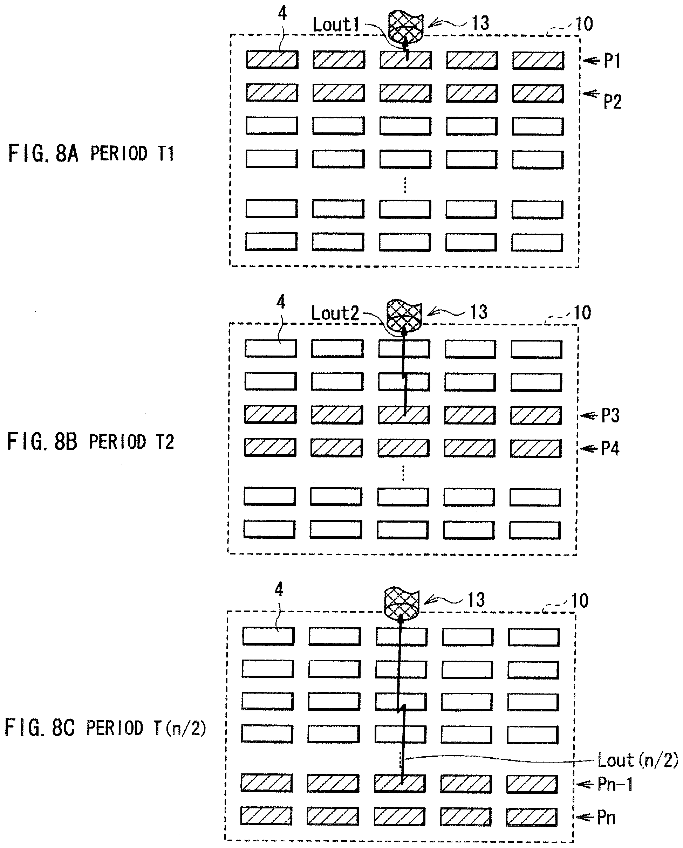

At first, referring to FIGs. 1 to 8A, 8B and 8C, the basic operations of the backlight system 1 and the liquid crystal display 3 according to the embodiment will be described below. FIGs. 8A, 8B and 8C show schematic plan views showing line sequential lighting operation in the light source section 10 of the backlight system 1. Moreover, FIG. 7 shows a timing waveform chart briefly showing the operation of the whole liquid crystal display 3, and (A) shows a voltage (a drive voltage) applied from the X driver 51 to each pixel electrode 212 in the liquid crystal panel 2, (B) shows the response of liquid crystal molecules (an actual potential state in the pixel electrode 212) and (C) shows a voltage (a pixel gate pulse) applied from the Y driver 52 to the gate of a TFT device in the liquid crystal panel 2. In FIGs. 8A, 8B and 8C, the case where the light-sensing section 13 is arranged on the top end of the light source section 10 is described as an example.

In the backlight system 1, when the switching devices 112R, 112G and 112B in the backlight driving section 11 turns into an on state, the constant currents IR, IG and IB flow from the constant current drivers 111R, 111G and 111B to the red LEDs 1R, the green LEDs 1G and the blue LEDs 1B in the light source section 10, respectively, thereby a red light, a green light and blue light are emitted so as to emit the illumination light Lout as a mixed color light.

At this time, the synchronizing signal S1 is supplied from the timing control section 61 to the microcomputer 12, so the microcomputer 12 supplies a control signal based on the synchronizing signal S1 to the PWM drivers 113R, 113G and 113B, thereby the switching devices 112R, 112G and 112B turns into an on state at a timing in synchronization with the synchronizing signal S1, and the lighting periods of the red LEDs 1R, the green LEDs 1G and the blue LEDs 1B synchronize the synchronizing signal S1.

Therefore, in the light source section 10, for example, as shown in FIGs. 8A, 8B and 8C, the lighting sections 4 positioned on a predetermined number of horizontal lines (in this case, two horizontal lines) are sequentially turned on at each of periods T1, T2, ..., T(n/2). More specifically, at first, in the period T1 shown in FIG. 8A, the lighting sections 4 positioned on horizontal lines indicated by P1 and P2 (hereinafter referred to as horizontal lines P1 and P2) are turned on to emit an irradiating light Lout1. Next, in the period T2, the lighting sections 4 positioned on horizontal lines indicated by P3 and P4 (hereinafter referred to as horizontal lines P3 and P4) are turned on to emit an irradiating light Lout2. Finally, the lighting sections 4 positioned on horizontal lines indicated by P(n-1) and P(n/2) (hereinafter referred to as horizontal lines P(n-1) and P(n/2)) are turned on to emit an irradiating light Lout(n/2).

Moreover, at this time, as shown in FIGs. 8A, 8B and 8C, the light-sensing section 13 receives the irradiating lights Lout1, Lout2, ..., Lout(n/2) from the lighting sections 4 line-sequentially turned on. More specifically, as shown in FIG. 6, in the red light-sensing section 13R, the green light-sensing section 13G and the blue light-sensing section 13B in the light-sensing section 13, each color light is extracted from the irradiating light Lout from the light source section 10 by each color photodiode, and a current according to the amount of each color light is generated, thereby the light reception data of the current value is supplied to the I/V conversion section 14.

Next, in the I/V conversion section 14, the IV conversion circuits 14R, 14G and 14B for red, green and blue convert the light reception data of the current values for red, green and blue into the light reception data D0R, D0G and D0B as light reception data of analog voltages, respectively, and outputs the light reception data D0R, D0G and D0B to the A/D conversion section 15.

Next, in the A/D conversion section 15, at first, the red, green and blue light reception data D0R, D0G and D0B are sampled at a predetermined timing which will be described later on the basis of the sampling signal S2 outputted from the microcomputer 12 to be converted into red, green and blue light reception data D1R, D1G and D1B (not shown), respectively. Then, A/D conversion is performed on the sampled light reception data D1R, D1G and D1B, thereby light reception data D2 for each color as a digital voltage signal is supplied to the microcomputer 12.

Then, in the microcomputer 12, on the basis of the light reception data D2 for each color supplied from the A/D conversion section 15, the PWM drivers 113R, 113G and 113B are controlled so as to keep the intensity and chromaticity (color balance) of the irradiating light Lout constant, and the on period of the switching devices 112R, 112G and 112B, that is, the lighting periods of the LEDs 1R, 1G and 1B are adjusted. Thus, on the basis of the illumination light Lout from the light source section 10, the lighting periods of the LEDs 1R, 1G and 1B are controlled on a color basis, thereby the light emission amount of the illumination light Lout is controlled.

On the other hand, in the whole liquid crystal display 3 according to the embodiment, the illumination light Lout from the light source section 10 of the backlight system 1 is modulated in a liquid crystal layer 20 by drive voltages outputted from the X driver 51 and the Y driver 52 to the pixel electrodes 212 on the basis of an image signal, and the modulated illumination light Lout is outputted from the liquid crystal panel 2 as a display light Dout. Thus, the backlight system 1 functions as a backlight (an illumination system for liquid crystal display) of the liquid crystal display 3, thereby an image is displayed by the display light Dout.

More specifically, for example, as shown in FIG. 7(C), a pixel gate pulse is applied from the Y driver 52 to the gates of the TFT devices on one horizontal line in the liquid crystal panel 2, and at the same time, as shown in FIG. 7(A), a drive voltage on the basis of the image signal is applied from the X driver 51 to the pixel electrodes 212 on one horizontal line. At this time, as shown in FIG. 7(B), the response of the actual potential of the pixel electrodes 212 relative to a pixel application voltage (response of liquid crystal molecules) is delayed (while the pixel application voltage starts at a timing t1, the actual potential starts at a timing t2), and the backlight system 1 turns into a light-on state in a period from timings t2 to t3 in which the actual potential is equal to the pixel application voltage, thereby an image on the basis of an image signal is displayed on the liquid crystal display 3. In FIG. 7, the period from the timing t1 to t3 corresponds to one horizontal period, and in the next horizontal period from the timings t3 to t5, the same operation as that in one horizontal period from the timings t1 to t3 is performed, except that the pixel application voltage is inverted relative to a common potential Vcom to prevent burn-in on the liquid crystal display.

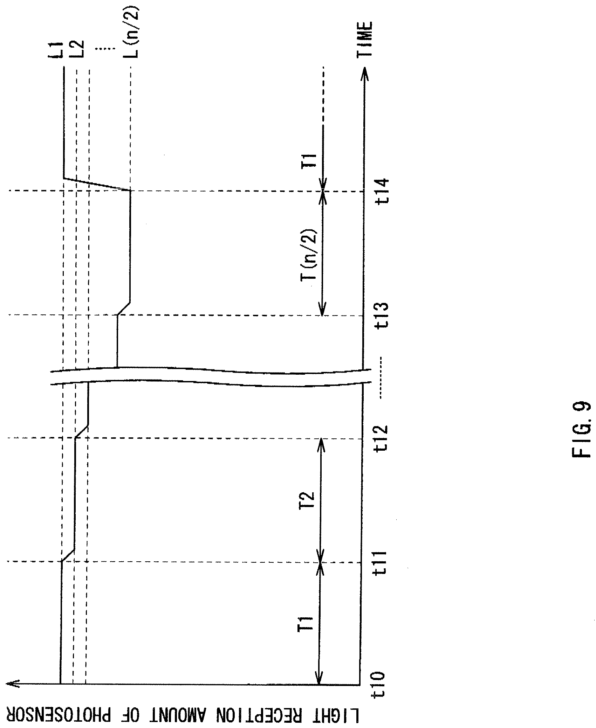

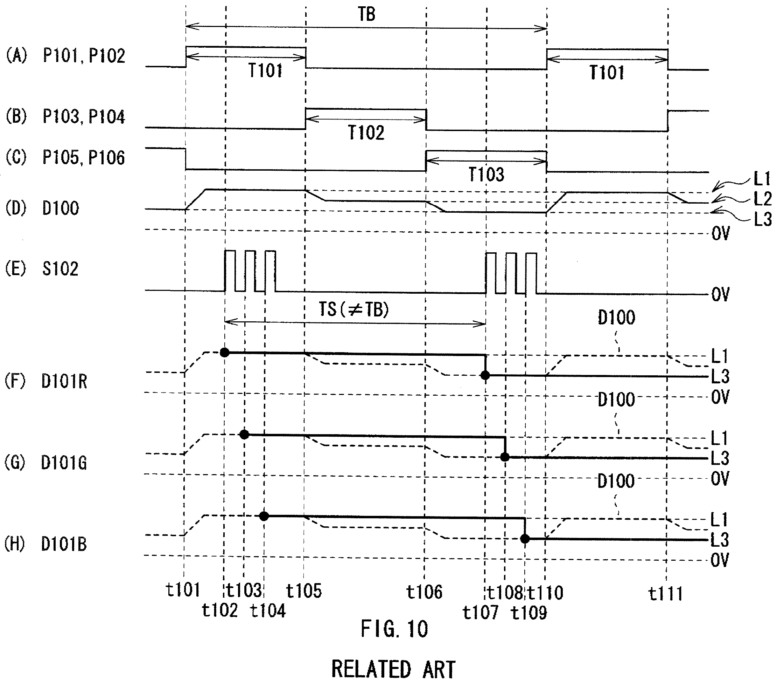

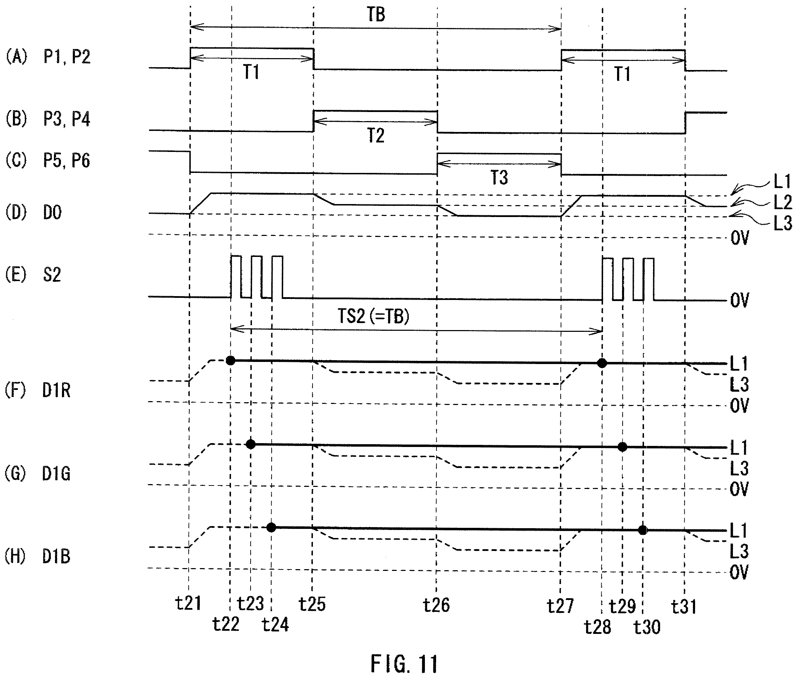

Next, referring to FIGs. 9 to 11 in addition to FIGs. 1 to 8A, 8B and 8C, the control operation of the backlight driving section 11 as one of characteristic parts of the embodiment of the invention will be described in detail below while comparing with a comparative example. FIG. 9 shows an example of a relationship between a light reception amount in a photosensor (a photodiode) in the light-sensing section 13 and the position of the lighting section 4, and in this case, as shown in FIGs. 8A, 8B and 8C, the case where the light-sensing section 13 is positioned on the top end of the light source section 10 is shown. FIG. 10 shows a timing waveform chart showing the operation of a backlight system (with the same configuration as that of the backlight system 1 according to the embodiment, except that the synchronizing signal S1 is not supplied from a timing control section to a microcomputer) in a related art according to the comparative example, and (A) to (C) show a lighting state ("H" indicates a light-on state and "L" indicates a light-off state) in horizontal lines P101 to P106 (not shown; corresponding to horizontal lines P1 to P6 in FIGs. 8A, 8B and 8C) arranged in order from the top end to the bottom end in a light source section, (D) shows a light receiving signal D100 (not shown; corresponding to the light reception data D0 in the embodiment) of an analog voltage inputted into an A/D conversion section, (E) shows a sampling signal S102 (not shown) of light reception data D100 supplied from the microcomputer to the A/D conversion section, and (F) to (G) show light reception data D101R, D101G and D101B (not shown) of analog voltages sampled in the A/D conversion section, respectively. FIG. 11 shows a timing waveform chart showing the operation of the backlight system 1 according to the embodiment, and (A) to (C) show a lighting state in the horizontal lines P1 to P6 shown in FIGs. 8A, 8B and 8C, (D) shows the light receiving signal D0 of an analog voltage inputted into the A/D conversion section 15, (E) shows the sampling signal S2 of the light reception data D0 supplied from the microcomputer 12 to the A/D conversion section 15, and (F) to (G) show the light reception data D1R, D1G and D1B of analog voltages sampled in the A/D conversion section 15, respectively. In FIGs. 10 and 11, to simplify the description, six horizontal lines are arranged in the light source section, and three periods T1 to T3 (or periods T101 to T103) constitutes a lighting period (blinking period) TB of the lighting section in synchronization with one horizontal period of the liquid crystal display panel 2.

At first, in the backlight system 1 according to the embodiment and the backlight system according to the comparative example, for example, as shown in FIGs. 8A to 8C, the irradiating lights Lout1, Lout2, ..., Lout(n/2) from the lighting sections 4 line-sequentially turned on are received by the light-sensing section 13. In this case, in the case where each lighting section 4 performs sequential lighting operation in such a manner, a distance from the light-sensing section 13 to each lighting section 4 is different; therefore, for example, as shown in FIG. 9, depending on the position of the lighting section 4 which is turned on (which horizontal line or which period the lighting section 4 is positioned), the amount of light received by the light-sensing section 13 is changed. More specifically, in the case of FIG. 9, in the period T1 (a period from timings t10 to t11), the photosensor obtains light reception data of the light amount L1 by the illumination light Lout1, in the period T2 (a period from timings t11 to t12), the photosensor obtains light reception data of the light amount L2 by the illumination light Lout2, and in the period T(n/2) (a period from timings t13 to t14), the photosensor obtains light reception data of the light amount L(n/2) by the illumination light Lout (n/2). In other words, even though the control section 12 controls the display light Lout to be constant as described above, the light reception amount in the photosensor is gradually reduced according to an increase in the distance between the light-sensing section 13 and the lighting section 14 which are turned on. Thus, in the case where the light reception amount is continually changed depending on the position of the lighting section 4 which is turned on, it is difficult to keep the intensity or chromaticity of the illumination light Lout constant on the basis of the light reception amount.

In the backlight system in a related art according to the comparative example shown in FIG. 10, the control operation of a backlight driving section is performed as below. More specifically, as shown in FIG. 10(E), a sampling signal S102 periodically turns into "H" at a predetermined timing, and light reception data D100 at this time is sampled to become light reception data D101R, D101G and D101B. The sampling signal S102 which turns into "H" at timings t102 to t104 corresponds to the sampling signals of red light reception data D100R, green light reception data D100G and blue light reception data D100B.

At this time, in the backlight system in the related art, as shown in FIG. 10, the lighting period (blinking period) TB of the lighting sections and the sampling period TS of the sampling signal S102 do not synchronize each other, and are different. Therefore, for example, at the timings t102 to t104, as shown in FIG. 10(F) to (H), the light reception data D100 on the basis of the irradiating light from the horizontal lines P101 and P102 corresponding to the period T101 is sampled to become the light reception data D101R, D101G and D101B, but on the other hand, at the timings t107 to t109 at which the smpling signal S102 is next supplied, the light reception data D100 on the basis of the irradiating light from the horizontal lines P105 and P106 corresponding to the period T103 is sampled to become the light reception data D101R, D101G and D101B. In other words, the lighting period TB and the sampling period TS do not synchronize each other, so the light reception data D101R, D101G and D101B sampled in the A/D conversion section is not constantly the light reception data D100 on the basis of the irradiating light from the lighting section positioned in a specific horizontal line, thereby the sampled light reception data D101R, D101G and D101B do not have a constant value, and are unstable.

In this case, for example, when a time constant CR by a resistance value and a capacity value increases in wiring between the I/V conversion section and the A/D conversion section, the light reception amount in the photosensor shown in FIG. 9 is equalized, and the values of the light reception data D101R, D101G and D101B are also equalized. However, in this case, due to a large time constant, it is difficult for the light-on/off operation of each lighting section to follow an image change such as displaying motion pictures. Moreover, in the case where a light guide is arranged between each lighting section and the light receiving section as described in a technique in Japanese Unexamined Patent Application Publication No. 2005-208486, the number of parts increases, thereby manufacturing cost is increased, and in addition to this, it is difficult to correctly align optical axes of a large number of light guides, so reliability may decline.

Therefore, in the backlight system 1 according to the embodiment, for example, the control operation of the backlight driving section 11 is performed as shown in FIG. 11. More specifically, unlike the comparative example, the lighting period (blinking period) TB of the lighting sections 4 and the sampling period TS2 of the sampling signal S2 synthesize each other, and are the same. Therefore, for example, at timings t21 to t23, as shown in FIG. 11(F) to (H), the light reception data D0 on the basis of the irradiating light from the horizontal lines P1 and P2 corresponding to the period T1 is sampled to become the light reception data D1R, D1G and D1B, and at timings t28 to t39 at which the sampling signal S2 is next supplied, the light reception data D0 on the basis of the irradiating light from the horizontal line P1 and P2 corresponding to the period T1 is sampled to become the light reception data D1R, D1G and D1B. In other words, the lighting period TB and the sampling period TS2 synchronize each other, so the light reception data D0 is sampled at a timing in synchronization with the lighting period TB of the lighting sections positioned in a specific horizontal line, thereby the light reception data D1R, D1G and D1B sampled in the A/D conversion section 15 constantly become the light reception data D1 on the basis of the irradiating light from the lighting sections positioned in the specific horizontal line, so the sampled light reception data D1R, D1G and D1B have a constant value, and are stable.

Thus, in the backlight system 1 according to the embodiment, the illumination light Lout from the light source section 10 sequentially turning on the lighting sections 4 is received by the light-sensing section 13, and the light reception data D0 on the basis of the light reception data from the light-sensing section 13 is sampled in the A/D conversion section 15 at a timing in synchronization with the lighting period TB of a specific lighting section. Therefore, the backlight driving section 11 is controlled by the microcomputer 12 on the basis of light reception data by the illumination light from the lighting sections 4 positioned in a specific horizontal line in the light reception data DO, and the light emission amount of each lighting section 4 is controlled. Thereby, the size of the light reception data D1 sampled by the A/D conversion section 15 is not dependent on the distance between the light-sensing section 13 and the lighting section 4 which is turned on (in this case, the size is constantly uniform).

As described above, in the embodiment, the irradiating light Lout from the light source section 10 sequentially turning on the lighting sections 4 is received by the light-sensing section 13, and the light reception data D0 on the basis of the light reception data from the light-sensing section 13 is sampled in the A/D conversion section 15 at a timing in synchronization with the lighting period TB of a specific lighting section, so the backlight driving section 11 can be controlled by the microcomputer 12 on the basis of the light reception data by the illumination light from the lighting sections 4 positioned in a specific horizontal line in the light reception data D0, and the light emission amount of each lighting section 4 can be controlled. Therefore, the size of the light reception data D1 sampled by the A/D conversion section 15 can be prevented from depending on the distance between the light-sensing section 13 and the lighting section 4 which is turned on. Moreover, the complication of the configuration such as an increase in the number of parts can be prevented. Therefore, fluctuations in the intensity of the illumination light Lout can be further reduced with a simple configuration.

Moreover, the light source section 10 includes a plurality of red LEDs 1R, a plurality of green LEDs 1G and a plurality of blue LEDs 1B, and is an additive process backlight system 1 obtaining the illumination light Lout as a specific color light (a white light) by mixing a plurality of color lights (a red light, a green light and a blue light), so in addition to fluctuations in the intensity of the illumination light Lout, fluctuations in the chromaticity (color balance) of the illumination light Louts can be further reduced with a simple configuration.

Further, in the wiring between the I/V conversion section 14 and the A/D conversion section 15, the time constant CR by the resistance value and the capacity value can be set to be small to such an extent that the image quality of an displayed image on the liquid crystal panel 2 is not impaired, so difficulty in the light-on/off operation of each lighting section 4 following an image change when displaying motion pictures due to the large time constant can be prevented. Moreover, the arrangement area of the resistor or the capacity device can be reduced, so compared to the related art, the substrate area of the whole system can be reduced, and a size reduction of the system can be achieved.

Moreover, in the embodiment, as shown in FIG. 11, the light reception data D0 is selectively sampled from the lighting sections 4 positioned on the horizontal lines P1 and P2 at a close distance from the position of the light-sensing section 13; therefore, for example, compared to the case where the light reception data D0 is selectively sampled from the lighting sections 4 positioned in the horizontal lines P5 and P6 or the like at a long distance from the position of the light-sensing sectioin 13, the sensitivity of light reception data to be sampled can be improved, and the backlight driving section 11 can be controlled more delicately.

Further, the backlight system 1 is used as a backlight (an illumination system for liquid crystal display) of the liquid crystal display 3, so fluctuations in the intensity or chromaticity of the display light Dout emitted from the liquid crystal panel 2 can be further reduced as in the case of the illumination light Lout. Therefore, compared to the related art, the image quality of a displayed image can be improved.

### Second Embodiment

Next, a second embodiment of the invention will be described below. In the embodiment, like components are denoted by like numerals as of the first embodiment and will not be further described.

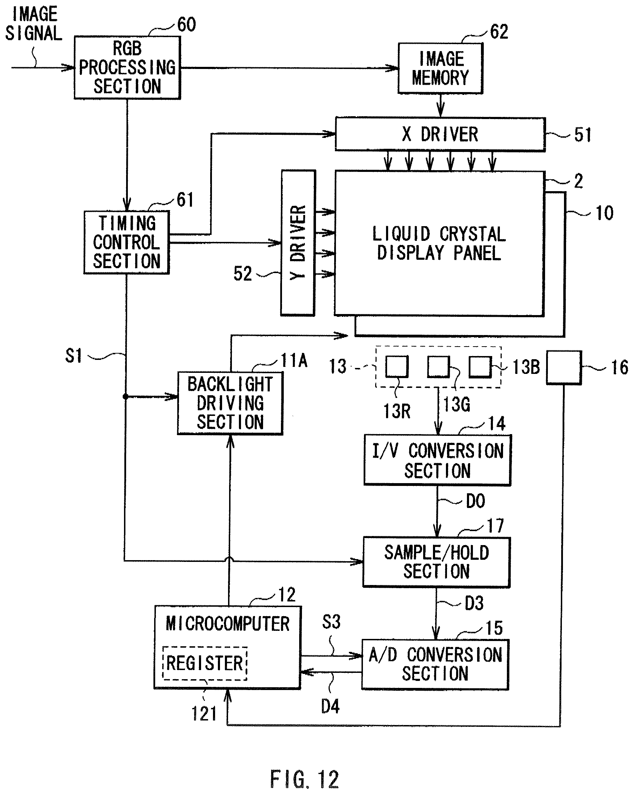

FIG. 12 shows the whole configuration of a liquid crystal display according to the embodiment. In the liquid crystal display, a backlight driving section 11A is arranged instead of the backlight driving section 11 in the liquid crystal display according to the first embodiment shown in FIG. 4, and a sample/hold section 17 is added, and the synchronizing signal S1 is supplied to the backlight driving section 11A and the sample/hold section 17 instead of the microcomputer 12.

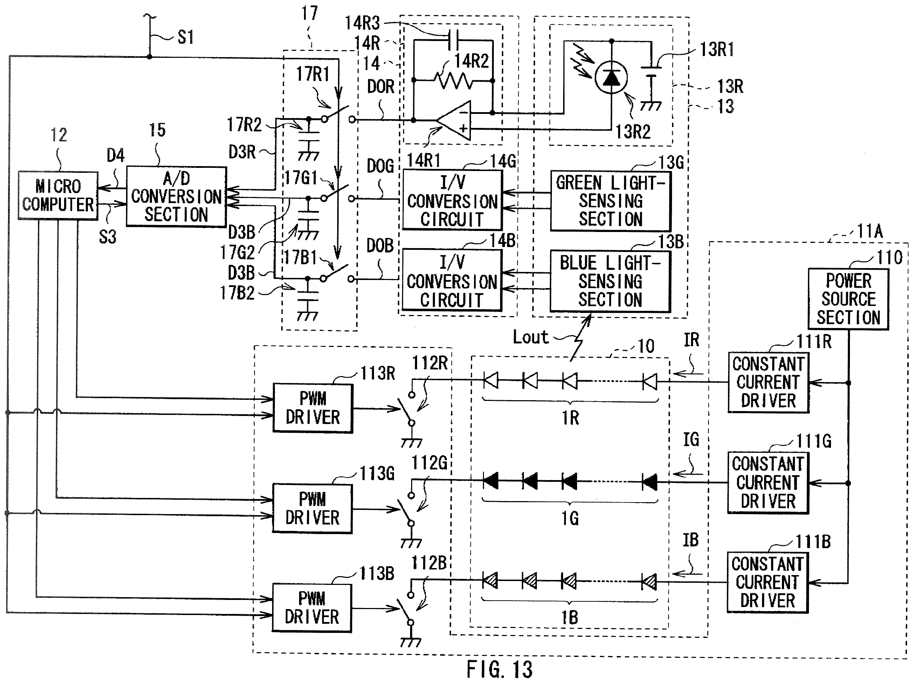

FIG. 13 shows specific configurations of the backlight driving section 11A, the sample/hold section 17 and the like, and corresponds to FIG. 6 described in the first embodiment.

The backlight driving section 11A includes PWM drivers 114R, 114G and 114B instead of the PWM drivers 113R, 113G and 113B of the backlight driving section 11 in the first embodiment, and inputs the synchronizing signal S1. In other words, the synchronizing signal S1 is inputted into the PWM drivers 114R, 114G and 114B instead of the microcomputer 12.

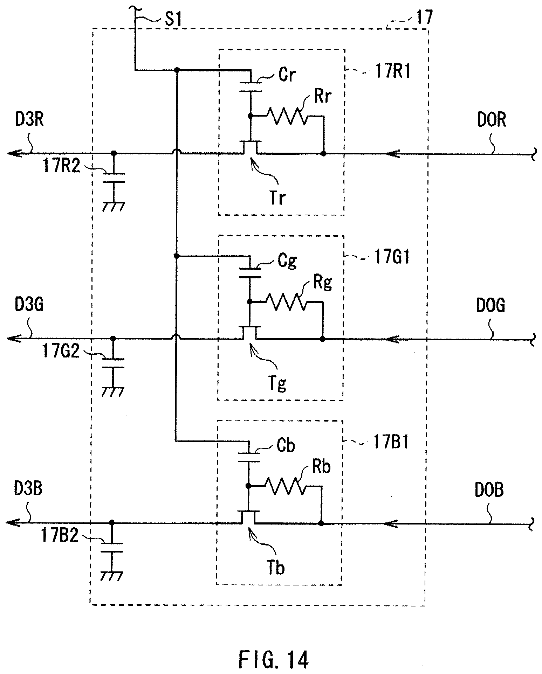

Moreover, the sample/hold section 17 includes switching devices 17R1, 17G1 and 17B1 performing an on/off operation according to the synchronizing signal S1 and capacitors 17R2, 17G2 and 17B2. The switching devices 17R1, 17G1 and 17B1 are inserted between the I/V conversion sections 14R, 14G and 14B and the A/D conversion section 15, respectively, and the capacitors 17R2, 17G2 and 17B2 are arranged between terminals on a side closer to the A/D conversion section 15 of the switching devices 17R1, 17G1 and 17B1 and the ground, respectively. Moreover, the switching devices 17R1, 17G1 and 17B1 have, for example, a configuration shown in FIG. 14. More specifically, the switching device 17R1 includes a transistor Tr, a resistor Rr and a capacitor Cr, the switching device 17G1 includes a transistor Tg, a resistor Rg and a capacitor Cg, and the switching device 17B1 includes a transistor Tb, a resistor Rb and a capacitor Cb. With such a configuration, in the sample/hold section 17, the switching devices 17R1, 17G1 and 17B1 turn into an on state at a timing according to the synchronizing signal S1, thereby the light reception data D0R, D0G and D0B from the I/V conversion section 14 are captured and held in the capacitors 17R2, 17G2 and 17B2, respectively.

In this case, the sample/hold section 17 corresponds a specific example of "a holding means" in the invention, the switching devices 17R1, 17G1 and 17B1 correspond specific examples of "a switching device" in the invention, and the capacitors 17R2, 17G2 and 17B2 correspond to specific examples of "a capacity device" in the invention.

Next, the operations of the backlight system with such a configuration according to the embodiment and the liquid crystal display will be described in detail below. The basic operations of the backlight system and the liquid crystal display are the same as those described in the first embodiment, and will be further described.

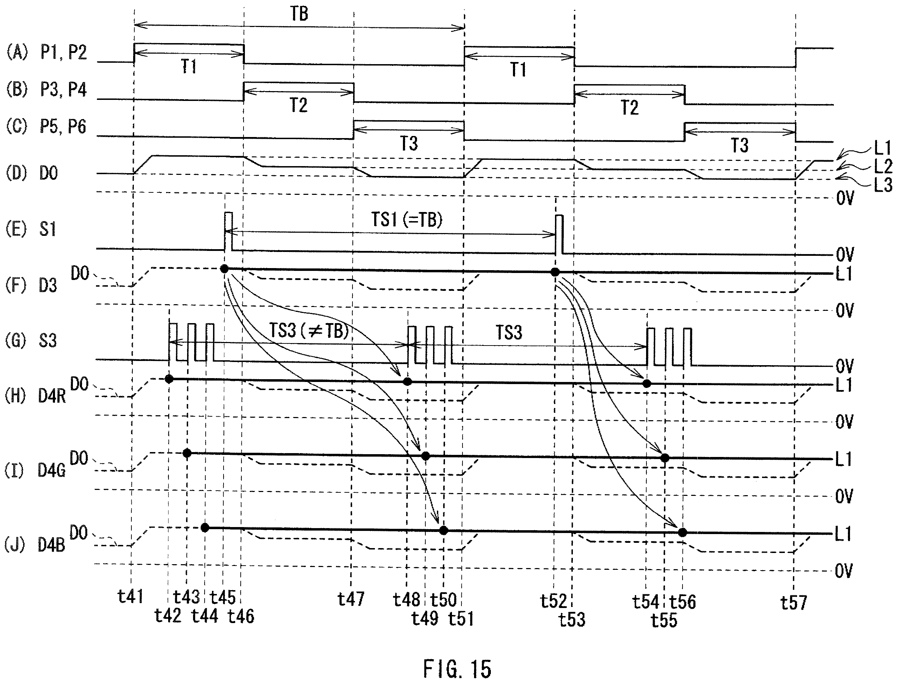

FIG. 15 shows a timing waveform chart of the operation of the backlight system according to the embodiment, and (A) to (C) show a lighting state in the horizontal lines P1 to P6, (D) shows the light receiving signal D0 of an analog voltage inputted into the A/D conversion section 15, (E) shows the synchronizing signal S1, (F) shows the held light reception data D3 to be supplied from the sample/hold section 17 to the A/D conversion section 15, (G) shows a sampling signal S3 of the light reception data D3 to be supplied from the microcomputer 12 to the A/D conversion section 15, (H) to (J) show light reception data D4R, D4G and D4B of analog voltages sampled in the A/D conversion section 15.

In the backlight system according to the embodiment, unlike the first embodiment shown in FIG. 11, the lighting period (blinking period) TB of the lighting section 4 and the sampling period TS3 of the sampling signal S3 do not synchronize each other, and are different. It is because in the embodiment, the synchronizing signal S1 is not supplied to the microcomputer 12. In the embodiment, the lighting period TB of the lighting section 4 and a period (a sample/hold period) in which the light reception data D0R, D0G and D0B are captured and held in the sample/hold section 17 synchronize each other and are the same (= the period of the synchronizing signal S1). It is because in the embodiment, the synchronizing signal S1 is supplied to the sample/hold section 17 and the PWM drivers 114R, 114G and 114B in the backlight driving section 11A.

Therefore, at first, for example, when the synchronizing signal S1 turns into "H" at a timing t45, the switching devices 17R1, 17G1 and 17B1 in the sample/hold section 17 turn into an on state, and the light reception data D0 on the basis of the irradiating light from the horizontal lines P1 and P2 corresponding to the period T1 is held in the capacitors 17R2, 17G2 and 17B2 to become the light reception data D3. Then, after that, when the synchronizing signal S1 turn back to "L", and the switching devices 17R1, 17G1 and 17B1 turns into an off state, irrespective of the value of the light reception data D0 from the I/V conversion section 14, the held light reception data D3 has a constant value. Therefore, even in the case where in a period (a period from timings t45 to t52) until the synchronizing signal S1 turns into "H" again, and the switching devices 17R1, 17G1 and 17B1 turn into an on state, the lighting period TB of the lighting section 4 and the sampling period TS4 of the sampling signal S3 in the A/D conversion section 15 do not synchronize each other, and it is not clear at which timing the sampling signal S3 turns into "H", in the A/D conversion section 15, the light reception data D3 held constant in the sample/hold section 17 is sampled instead of the light reception data D0 of which the value is changed in the periods T1 to T3, so as shown by an arrow in FIG. 15, the sampled light reception data D4R, D4G and D4B become constant and stable. Even in the next period from timings t52 to t56, the same operation as that in the period from the timings t45 to t50 is performed.

Thus, in the backlight system according to the embodiment, the light reception data D0 on the basis of the light reception data from the light-sensing section 13 is held in the sample/hold section 17 at a timing in synchronization with the lighting period TB of a specific lighting section, and the held light reception data D3 is sampled in the A/D conversion section 15 to be supplied to the microcomputer 12. Therefore, as in the case of the first embodiment, the size of the light reception data D4 sampled in the A/D conversion section 15 is not dependent on the distance between the light-sensing section 13 and the lighting section 4 which is turned on (in this case, the size is constantly uniform).

As described above, in the embodiment, the light reception data D0 on the basis of the light reception data from the light-sensing section 13 is held in the sample/hold section 17 at a timing in synchronization with the lighting period TB of a specific lighting section, and the held light reception data D3 is sampled in the A/D conversion section 15 to be supplied to the microcomputer 12, so as in the case of the first embodiment, the size of the light reception data D4 sampled in the A/D conversion section 15 can be prevented from depending on the distance between the light-sensing section 13 and the lighting section 4 which is turned on. Moreover, the compilation of the configuration such as an increase in the number of parts can be prevented. Therefore, as in the case of the first embodiment, fluctuations in the intensity and chromaticity of the illumination light Lout can be further reduced with a simple configuration.

Moreover, as in the case of the first embodiment, the backlight system is used as a backlight (a illumination system for liquid crystal display) of the liquid crystal display, so as in the case of the illumination light Lout, fluctuations in the intensity or chromaticity of the display light Dout emitted from the liquid crystal panel 2 can be further reduced. Therefore, compared to the related art, the image quality of a displayed image can be improved.

Further, unlike the first embodiment, in the embodiment, the synchronizing signal S1 is not supplied to the microcomputer 12, and is controlled by hardware instead of software, so it is not necessary to change a timing or the like for control in the microcomputer 12. More specifically, in the embodiment, the sampling signal S3 to be supplied to the A/D conversion section 15 can be set in an arbitrary sampling period, and unlike the first embodiment, it is not necessary for the sampling period to synchronize the lighting period TB of the lighting section 4. Therefore, compared to the first embodiment, the backlight driving section 11 can be controlled more easily.

Although the present invention is described referring to the first and the second embodiments, the invention is not limited to the embodiment, and can be variously modified.

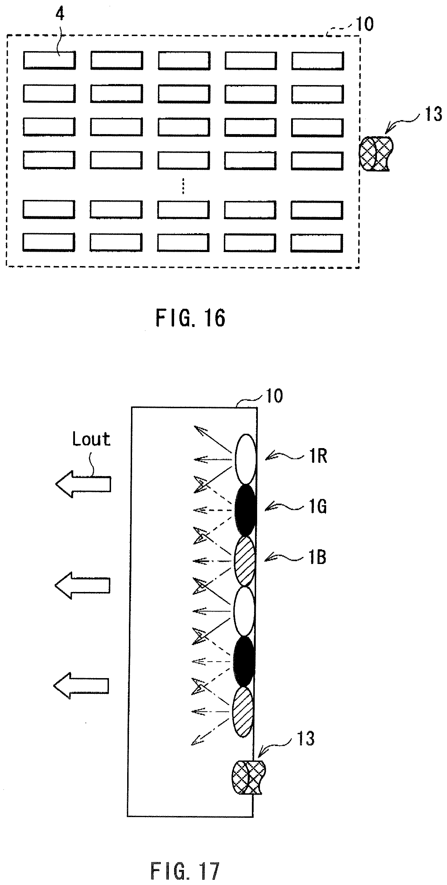

For example, in the above-described embodiments, the case where the light-sensing section 13 is arranged on the top end of the light source section 10 as shown in FIGs. 8A, 8B and 8C is described; however, the position of the light-sensing section 13 is not limited to this case, and the light-sensing section 13 may be arranged, for example, on the bottom end of the light source section 10, and, for example, as shown in FIGs. 16 and 17, the light-sensing section 13 may be arranged on a side (refer to FIG. 16) or a back side (refer to FIG. 17) of the light source section 10. In the case where the light-sensing section 13 is arranged on the back side of the light source section 10 as shown in FIG. 17, compared to the case where the light-sensing section 13 is arranged on the top end, the bottom end or the side of the light source section 10, the illumination light Lout with an equalized light amount can be received.

Moreover, in the above-described embodiments, the backlight driving section 11 is controlled using the light reception data from one light-sensing section 13; however, for example, a plurality of light receiving sections are arranged in different positions relative to the light source section 10, and the backlight driving section 11 may be controlled using an average value of light reception data from the plurality of light receiving sections.

In the above-described embodiments, the case where the light reception data D0 is selectively sampled from the lighting sections 4 positioned on the horizontal lines P1 and P2 closest to the position of the light-sensing section 13 is described; however, the positions of the horizontal lines in the light source section 10 selectively sampling the light reception data D0 are not limited to the case, and the light reception data D0 may be selectively sampled from the lighting sections 4 positioned on the horizontal lines P5 and P6 or the like far from the position of the light-sensing section 13. In such a configuration, compared to the case where the light reception data D0 is selectively sampled from the lighting sections 4 positioned on a horizontal line close to the light-sensing section 13, a spatial integral effect in the illumination light Lout can be improved, and light reception data with higher plane uniformity can be obtained. Therefore, the light emission amount in the light source 10 can be more uniform in a plane.

In the above-described embodiments, as an example of the synchronizing signal S1, the vertical synchronizing signal Vsync when displaying an image on the liquid crystal panel 2 is described; however, for example, the backlight driving section 11 may be controlled using a synchronizing signal with a frequency equal to 1/2 of the frequency of the vertical synchronizing signal Vsync or a synchronizing signal with a frequency equal to 1/4 of the frequency of the vertical synchronizing signal Vsync.

In the above-described embodiments, the case where the light source section 10 performs line sequential lighting on a two-horizontal-line basis is described; however, for example, line sequential lighting may be performed on an any number of horizontal line basis such as on a one-horizontal-line basis.

In the above-described embodiments, the case where the light source section 10 includes the red LED 1R, the green LED 1G and the blue LED 1B is described; however, in addition to them (or instead of them), the light source section 10 may include an LED emitting another color light. In the case where four or more color lights are used, a color reproduction range can be expanded, and more various colors can be displayed.

In the above-described embodiments, the additive process backlight system 1 in which the light source section 10 includes a plurality of red LEDs 1R, a plurality of green LEDs 1G and a plurality of blue LEDs 1B, and the illumination light Lout as a specific color light (a white light) is obtained by mixing a plurality of color lights (a red light, a green light and a blue light) is described; however, the invention may be applied to a backlight system in which a light source section includes one kind of LED, and a single-color illumination light is emitted. In the backlight system with such a configuration, fluctuations in the intensity of the illumination light can be further reduced with a simple configuration.

In the above-described embodiments, the case where the liquid crystal display 3 is a transmissive liquid crystal display including the backlight system 1 is described; however, the light source device according to the embodiment of the invention may be used as a front light system to form a reflective liquid crystal display.

For example, the light source device according to the embodiments of the invention is applicable to not only an illumination system for liquid crystal display but also any other light source device such as an illumination device.

It should be understood by those skilled in the art that various modifications, combinations, sub-combinations and alterations may occur depending on design requirements and other factors insofar as they are within the scope of the appended claims or the equivalents thereof.

## Claims

1. A light emission amount control device, being applied to a light source device, the light source device including a light source (10) and a drive means (11), the light source (10) including a plurality of lighting sections (4/Pn) controllable independently of one another, each lighting section (4/Pn) occupying a respective different location, the drive means (11) for driving the light source so that the lighting sections (4/Pn) at different locations are sequentially turned on, the light emission amount control device comprising:
a light-sensing device (13) receiving light from the light source (10) in which the lighting sections (4/Pn) are sequentially turned on;
a control means (12) adapted to control the light emission amount of the plurality of lighting sections (4/Pn) by controlling the drive means (11) dependent on the light received by the light-sensing device (13), and
a sampling means (15) for sampling the light receiving signal at a timing in synchronization with a lighting period of a specific lighting section at a specific location, to supply the control means (12) with the sampled light receiving signal;
**characterized in that** the control means (12) is configured to control the light emission amounts of each of the plurality of lighting sections (4/Pn) at said different locations dependent on the light received by the light-sensing device (13) from the specific lighting section at the specific location.

2. A light source driving device comprising:
the light emission amount control device according to claim 1, and
said drive means (11) for driving the light source (10) so that the lighting sections at different locations are sequentially turned on.

3. A light source device comprising:
the light source driving device according to claim 2, and
said light source (10) including a plurality of lighting sections (4/Pn) controllable independently of one another, each of said plurality of lighting sections (4/Pn) occupying a respective different location.

4. The light source device according to claim 3, wherein:
the sampling means (15) is configured to sample the light receiving signal from the light-sensing device (13).

5. The light source device according to claim 3, comprising:
a holding means (17) for obtaining and holding the light receiving signal from the light-sensing device (13) at a timing in synchronization with a lighting period of the specific lighting section;
wherein the sampling means (15) is configured to sample the light receiving signal held by the holding means (17).

6. The light source device according to claim 5, wherein
the holding means (17) includes:
a switching device (17R1, 17G1, 17B1) turning into an on state at a timing in synchronization with the lighting period; and
a capacity device (17R2, 17G2, 17B2) electrically storing a light receiving signal obtained from the light-sensing device (13) through the switching device (17R1, 17G1, 17B1).

7. The light source device according to claim 3, wherein
the light source device (10) is an additive process light source device obtaining a specific color light by mixing a plurality of color lights,
each lighting section (41, 42) in the light source includes a plurality of kinds of light-emitting devices (1R, 1G, 1B) emitting different color lights,
the light-sensing device (13) includes a plurality of kinds of light-sensing devices (13R, 13G, 13B) each extracting and receiving a respective color component from a mixed color light produced by mixing color lights from the plurality of kinds of light-emitting devices (1R, 1G, 1B), and
the control means (12) is adapted to control the drive means (11) for all of said kinds of light-emitting devices (1R, 1G, 1B) on the basis of light receiving signals from said specific lighting section, and controls the light emission amounts of each of the plurality of kinds of light-emitting devices (1R, 1G, 1B) based on the respective received signal of the corresponding colour component.

8. The light source device according to claim 3, applied to a liquid crystal panel which modulates incident light on the basis of an image signal,
wherein the light source device (10) is used as an illumination system for liquid crystal display which supplies light from each lighting section as the incident light to the liquid crystal panel, the amount of the light from each lighting section being controlled by the control means (12).

9. The light source device according to claim 8, wherein:
the sampling means (15) is configured to sample the light receiving signal from the light-sensing device (13) at a timing in synchronization with a lighting period of the specific lighting section corresponding to a display period of the liquid crystal panel, and to supply the light receiving signal to the control means (12).

10. The light source device according to claim 8, comprising:
a holding means (17) for obtaining and holding the light receiving signal from the light-sensing device (13) at a timing in synchronization with a lighting period of the specific lighting section corresponding to a display period of the liquid crystal panel;
wherein the sampling means (15) is configured to sample the light receiving signal held by the holding means (17) to supply the control means (12) with the light receiving signal sampled.

11. A liquid crystal display comprising:
an illumination means inlcuding the light source device (10) according to claim 3, for emitting light; and
a liquid crystal panel modulating the light emitted from the illumination means on the basis of an image signal.

## Patentansprüche

1. Lichtemissionsmengen-Steuervorrichtung, die auf eine Lichtquellenvorrichtung angewendet wird, wobei die Lichtquellenvorrichtung eine Lichtquelle (10) und ein Ansteuermittel (11) umfasst, wobei die Lichtquelle (10) eine Vielzahl von Beleuchtungssektionen (4/Pn) umfasst, die unabhängig voneinander steuerbar sind, wobei jede Beleuchtungssektion (4/Pn) einen jeweiligen anderen Ort einnimmt, wobei das Ansteuermittel (11) dazu dient, die Lichtquelle so zu betreiben, dass die Beleuchtungssektionen (4/Pn) an unterschiedlichen Orten aufeinanderfolgend eingeschaltet werden, wobei die Lichtemissionsmengen-Steuervorrichtung umfasst:
eine Lichtabtastvorrichtung (13), die Licht von der Lichtquelle (10) empfängt, in der die Beleuchtungssektionen (4/Pn) aufeinanderfolgend eingeschaltet werden,
ein Steuermittel (12), das eingerichtet ist, die Lichtemissionsmenge der Vielzahl der Beleuchtungssektionen (4/Pn) durch Steuern des Ansteuermittels (11) abhängig von dem durch die Lichtabtastvorrichtung (13) empfangenen Licht zu steuern, und
ein Abtastmittel (15) zur Abtastung des Lichtempfangssignals mit einem Timing, das mit einer Beleuchtungsperiode einer spezifischen Beleuchtungssektion an einem spezifischen Ort synchron ist, um das Steuermittel (12) mit dem abgetasteten Lichtempfangssignal zu versorgen,
**dadurch gekennzeichnet, dass** das Steuermittel (12) konfiguriert ist, die Lichtemissionsmengen von jeder der Vielzahl der Beleuchtungssektionen (4/Pn) an den unterschiedlichen Orten abhängig von dem Licht zu steuern, das durch die Lichtabtastvorrichtung (13) von der spezifischen Beleuchtungssektion an dem spezifischen Ort empfangen wird.

2. Lichtquellenbetriebsvorrichtung umfassend:
die Lichtemissionsmengen-Steuervorrichtung nach Anspruch 1, und
das Ansteuermittel (11), zum Ansteuern der Lichtquelle (10), so dass die Beleuchtungssektionen an unterschiedlichen Orten aufeinanderfolgend eingeschaltet werden.

3. Lichtquellenvorrichtung umfassend:
die Lichtquellenbetriebsvorrichtung nach Anspruch 2 und
die Lichtquelle (10), die eine Vielzahl von Beleuchtungssektionen (4/Pn) umfasst, die unabhängig voneinander steuerbar sind, wobei jede der Vielzahl der Beleuchtungssektionen (4/Pn) einen jeweiligen anderen Ort einnimmt.

4. Lichtquellenvorrichtung nach Anspruch 3, wobei:
das Abtastmittel (15) konfiguriert ist, das Lichtempfangssignal aus der Lichtabtastvorrichtung (13) abzutasten.

5. Lichtquellenvorrichtung nach Anspruch 3, umfassend:
ein Haltemittel (17) zum Erhalten und Halten des Lichtempfangssignals von der Lichtabtastvorrichtung (13) mit einem Timing, das synchron mit einer Beleuchtungsperiode der spezifischen Beleuchtungssektion ist,
wobei das Abtastmittel (15) konfiguriert ist, das durch das Haltemittel (17) gehaltene Lichtempfangssignal abzutasten.

6. Lichtquellenvorrichtung nach Anspruch 5, wobei
das Haltemittel (17) umfasst:
eine Schaltvorrichtung (17R1, 17G1, 17B1), die sich mit einem Timing in Synchronisation mit der Beleuchtungsperiode in einen Einschaltzustand schaltet, und
eine Kapazitätsvorrichtung (17R2, 17G2, 17B2), die ein Lichtempfangssignal elektrisch speichert, das durch die Schaltvorrichtung (17R1, 17G1, 17B1) von der Lichtabtastvorrichtung (13) erhalten wird.

7. Lichtquellenvorrichtung nach Anspruch 3, wobei
die Lichtquellenvorrichtung (10) eine Lichtquellenvorrichtung für ein additives Verfahren ist, die ein Licht mit einer spezifischen Farbe durch Mischen einer Vielzahl von farbigem Licht erhält,
jede Beleuchtungssektion (41, 42) in der Lichtquelle eine Vielzahl von Arten von lichtemittierenden Vorrichtungen (1R, 1G, 1B) umfasst, die Licht mit unterschiedlichen Farben emittieren,
die Lichtabtastvorrichtung (13) eine Vielzahl von Arten von Lichtabtastvorrichtungen (13R, 13G, 13B) umfasst, die jeweils eine jeweilige Farbkomponente aus einem Licht mit gemischten Farben extrahieren und empfangen, das durch Mischen von farbigem Licht aus der Vielzahl der Arten der lichtemittierenden Vorrichtungen (1R, 1G, 1B) erzeugt wird, und
das Steuermittel (12) eingerichtet ist, das Ansteuermittel (11) für alle der Arten der lichtemittierenden Vorrichtungen (1R, 1G, 1B) auf der Grundlage der Lichtempfangssignale von dem spezifischen Beleuchtungsabschnitt zu steuern, und die Lichtemissionsmengen von jeder der Vielzahl der Arten der lichtemittierenden Vorrichtungen (1R, 1G, 1B) beruhend auf dem jeweiligen empfangenen Signal der entsprechenden Farbkomponente steuert.

8. Lichtquellenvorrichtung nach Anspruch 3, die auf eine Flüssigkristalltafel angewendet wird, die einfallendes Licht auf der Grundlage eines Bildsignals moduliert,
wobei die Lichtquellenvorrichtung (10) als ein Beleuchtungssystem für eine Flüssigkristallanzeige verwendet wird, die der Flüssigkristalltafel Licht von jeder Beleuchtungssektion als das einfallende Licht zuführt, wobei die Menge des Lichts von jedem Beleuchtungsabschnitt durch das Steuermittel (12) gesteuert wird.

9. Lichtquellenvorrichtung nach Anspruch 8, wobei:
das Abtastmittel (15) konfiguriert ist, das Lichtempfangssignal aus der Lichtabtastvorrichtung (13) mit einem Timing abzutasten, das mit einer Beleuchtungsperiode der spezifischen Beleuchtungssektion synchron ist, die einer Anzeigeperiode der Flüssigkristalltafel entspricht, und das Lichtempfangssignal dem Steuermittel (12) zuzuführen.

10. Lichtquellenvorrichtung nach Anspruch 8, umfassend:
ein Haltemittel (17) zum Erhalten und Halten des Lichtempfangssignals von der Lichtabtastvorrichtung (13) mit einem Timing, das synchron mit einer Beleuchtungsperiode des spezifischen Beleuchtungsabschnitts ist, die einer Anzeigeperiode der Flüssigkristalltafel entspricht,
wobei das Abtastmittel (15) konfiguriert ist, das durch das Haltemittel (17) gehaltene Lichtempfangssignal abzutasten, um das Steuermittel (12) mit dem abgetasteten Lichtempfangssignal zu versorgen.

11. Flüssigkristallanzeige umfassend:
ein Beleuchtungsmittel, das die Lichtquellenvorrichtung (10) nach Anspruch 3 umfasst, zum Emittieren von Licht, und
eine Flüssigkristalltafel, die das vom Beleuchtungsmittel emittierte Licht auf der Grundlage des Bildsignals moduliert.

## Revendications

1. Dispositif de contrôle de quantité d'émission de lumière, appliqué à un dispositif formant source de lumière, le dispositif formant source de lumière comprenant une source de lumière (10) et des moyens de commande (11), la source de lumière (10) comprenant une pluralité de sections d'éclairage (4/Pn) pouvant être commandées indépendamment les unes des autres, chaque section d'éclairage (4/Pn) occupant un emplacement différent respectif, les moyens de commande (11) servant à commander la source de lumière de sorte que les sections d'éclairage (4/Pn) aux différents emplacements soient activées séquentiellement, le dispositif de contrôle de quantité d'émission de lumière comprenant :
un dispositif de détection de lumière (13) recevant la lumière provenant de la source de lumière (10) dans laquelle les sections d'éclairage (4/Pn) sont activées séquentiellement ;
des moyens de contrôle (12) conçus pour contrôler la quantité d'émission de lumière de la pluralité de sections d'éclairage (4/Pn) en contrôlant les moyens de commande (11) en fonction de la lumière reçue par le dispositif de détection de lumière (13), et
des moyens d'échantillonnage (15) pour échantillonner le signal de réception de lumière en synchronisation avec une période d'allumage d'une section d'éclairage spécifique à un emplacement spécifique, pour fournir aux moyens de contrôle (12) le signal de réception de lumière échantillonné ;
**caractérisé en ce que** les moyens de contrôle (12) sont configurés pour contrôler les quantités d'émission de lumière de chacune de la pluralité de sections d'éclairage (4/Pn) auxdits différents emplacements en fonction de la lumière reçue par le dispositif de détection de lumière (13) à partir de la section d'éclairage spécifique à l'emplacement spécifique.

2. Dispositif de commande de source de lumière comprenant :
le dispositif de contrôle de quantité d'émission de lumière selon la revendication 1, et
lesdits moyens de commande (11) pour commander la source de lumière (10) de sorte que les sections d'éclairage aux différents emplacements soient activées séquentiellement.

3. Dispositif formant source de lumière comprenant :
le dispositif de commande de source de lumière selon la revendication 2, et
ladite source de lumière (10) comprenant une pluralité de sections d'éclairage (4/Pn) pouvant être commandées indépendamment les unes des autres, chacune de ladite pluralité de sections d'éclairage (4/Pn) occupant un emplacement différent respectif.

4. Dispositif formant source de lumière selon la revendication 3, dans lequel :
les moyens d'échantillonnage (15) sont configurés pour échantillonner le signal de réception de lumière provenant du dispositif de détection de lumière (13).

5. Dispositif formant source de lumière selon la revendication 3, comprenant :
des moyens de maintien (17) pour obtenir et maintenir le signal de réception de lumière provenant du dispositif de détection de lumière (13) en synchronisation avec une période d'allumage de la section d'éclairage spécifique ;
dans lequel les moyens d'échantillonnage (15) sont configurés pour échantillonner le signal de réception de lumière maintenu par les moyens de maintien (17).

6. Dispositif formant source de lumière selon la revendication 5, dans lequel
les moyens de maintien (17) comprennent :
un dispositif de commutation (17R1, 17G1, 17B1) passant dans un état activé en synchronisation avec la période d'allumage ; et
un dispositif de capacité (17R2, 17G2, 17B2) stockant électriquement un signal de réception de lumière obtenu à partir du dispositif de détection de lumière (13) par l'intermédiaire du dispositif de commutation (17R1, 17G1, 17B1).

7. Dispositif formant source de lumière selon la revendication 3, dans lequel
le dispositif formant source de lumière (10) est un dispositif formant source de lumière de traitement additif obtenant une lumière de couleur spécifique en mélangeant une pluralité de lumières de couleur,
chaque section d'éclairage (41, 42) dans la source de lumière comprend une pluralité de types de dispositifs d'émission de lumière (1R, 1G, 1B) émettant différentes lumières de couleur,
le dispositif de détection de lumière (13) comprend une pluralité de types de dispositifs de détection de lumière (13R, 13G, 13B) extrayant et recevant chacun une composante de couleur respective d'une lumière de couleur mélangée produite en mélangeant les lumières de couleur provenant de la pluralité de types de dispositifs d'émission de lumière (1R, 1G, 1B), et
les moyens de contrôle (12) sont conçus pour contrôler les moyens de commande (11) pour la totalité desdits types de dispositifs d'émission de lumière (1R, 1G, 1B) sur la base des signaux de réception de lumière provenant de ladite section d'éclairage spécifique, et contrôlent les quantités d'émission de lumière de chacun de la pluralité de types de dispositifs d'émission de lumière (1R, 1G, 1B) sur la base du signal reçu respectif de la composante de couleur correspondante.

8. Dispositif formant source de lumière selon la revendication 3, appliqué à un panneau à cristaux liquides qui module la lumière incidente sur la base d'un signal d'image,
dans lequel le dispositif formant source de lumière (10) est utilisé en tant que système d'éclairage pour un afficheur à cristaux liquides qui fournit la lumière provenant de chaque section d'éclairage en tant que lumière incidente au panneau à cristaux liquides, la quantité de lumière provenant de chaque section d'éclairage étant contrôlée par les moyens de contrôle (12).

9. Dispositif formant source de lumière selon la revendication 8, dans lequel :
les moyens d'échantillonnage (15) sont configurés pour échantillonner le signal de réception de lumière provenant du dispositif de détection de lumière (13) en synchronisation avec une période d'allumage de la section d'éclairage spécifique correspondant à une période d'affichage du panneau à cristaux liquides, et pour fournir le signal de réception de lumière aux moyens de contrôle (12).

10. Dispositif formant source de lumière selon la revendication 8, comprenant :
des moyens de maintien (17) pour obtenir et maintenir le signal de réception de lumière provenant du dispositif de détection de lumière (13) en synchronisation avec une période d'allumage de la section d'éclairage spécifique correspondant à une période d'affichage du panneau à cristaux liquides ;
dans lequel les moyens d'échantillonnage (15) sont configurés pour échantillonner le signal de réception de lumière maintenu par les moyens de maintien (17) pour fournir aux moyens de contrôle (12) le signal de réception de lumière échantillonné.

11. Afficheur à cristaux liquides comprenant :
des moyens d'éclairage comprenant le dispositif formant source de lumière (10) selon la revendication 3, pour émettre de la lumière ; et
un panneau à cristaux liquides modulant la lumière émise par les moyens d'éclairage sur la base d'un signal d'image.
